# EUROPEAN PATENT APPLICATION

(11) **EP 2 109 040 A2**
(43) Date of publication of application: **14.10.2009**
(21) Application number: 09005302.6
(22) Date of filing: 14.04.2009
(51) Int. Cl.: G06F 9/44

(54) **Software build process using meta data for mapping the input to the output of a software module**

(30) Priority: 11.02.2008 GB 0802497
(71) Applicant: Nokia Corporation, 00045 Nokia Group (FI)
(72) Inventor: Kurth, Lars, London SE1 8HP (GB); Taylor, Richard, London SE1 8HP (GB); Murphy, Timothy, London SE1 8HP (GB); Brantom, Andre, London SE1 8HP (GB)
(74) Representative: Coyle-Gilchrist, Matthew John Toby

(57) **Abstract**

Build description modules, each having an interface specification portion that describes inputs and outputs of the module and an implementation portion, containing build instructions that map the inputs to the outputs, are combined to form a monolithic build description, according to which a software system can be built.

## Description

### FIELD OF THE INVENTION

This invention relates to modules for use in a build description. The invention also relates to a method of generating a monolithic build description using such modules and to a build system configured to perform this method.

### BACKGROUND OF THE INVENTION

The term 'build' refers to the process a process by which software and software-related information is converted into a different useful form. Typically, a build entails the conversion of computer program source code into machine code that can be executed by a particular computer device or class of devices. However, building also entails the translation of documents between different formats and other types of conversion.

Build utilities are commonly used to automate at least part of the build process. For example, build utilities are commonly used to automate the process of compiling computer source code into machine code. This automated build process is in contrast to a manual build process, where a human builder has to perform multiple, often tedious and error prone tasks.

A commonly used build utility is GNU Make. Make is a utility for automatically building software systems. Make uses a description that has been written for a particular build (i.e. a particular software system to be built on particular hardware) and tracks which source files have changed since the last time the project was built and invokes a compiler on only those files and their dependants. This build description is commonly referred to as a "makefile" and is written in a low-level build language referred to as the Make build language.

In their basic forms, Make and other build utilities require the user to manually track all dependencies between files in a project. This process is highly error prone for complex projects and errors, which are common since a forgotten or an extra dependency is often not immediately obvious in a build description, often surface as subtle bugs in the software. In complex software systems, the root cause of these bugs can be incredibly difficult to identify, not least due to the size and complexity of the build description.

Build utilities suffer from an increase in complexity as they are used to create ever larger software systems, containing an increasing number of software components and interdependencies. An example of a large and complex software system is that of an operating system, together with its applications. If a build description, such as a makefile, is constructed by hand for a complex system, the burden upon the user is significant and it is in practice inevitable that errors will occur in the description. This is particularly the case when a project is modified subsequent to the creation of the build description and the description is 'patched' to reflect to the changes. This substantial burden upon the user can be alleviated by using a build system that at least partially automates the construction of the build description that will be used by the build utility.

Current build systems can typically be categorised into on of two general classes: dual language build systems and single language build systems.

### Dual Language Build Systems

Dual language build systems are systems that take build instructions in a high level specification language and translate them into a low level build language to use with a build utility (which may be internal to the build system, or supplied by a third party).

The high level specification language provides the common procedures and concepts that are used to build a system and can optimised for ease-of-use, whilst the low level language provides functionality that schedules processes and manages dependencies. The principle behind a dual language system is therefore that the user can make use high level language programming techniques without sacrificing the functionality of the low level language. However, in practice use of both the high and low level languages is constrained by the translation process.

GNU Automake is an example of a dual language build system. It accepts instructions in a high level language and automatically generates dependency information in order to generate a makefile. In the simplest case, it is enough to provide Automake with a high-level specification that includes just the name of the program to build, a list of source files, command line options to be passed to a compiler and command line options to be passed to a linker. From this specification, Automake generates a makefile containing the low level instructions required to cause Make to compile the program, perform clean up functions (i.e. remove unwanted files generated during the compilation), install the program in standard directories, uninstall the program from where it was installed, create a source distribution archive and test compilation from the created archive.

Other examples of dual language build systems include IMake provided by The Open Group, and Symbian Build System v1, provided by Symbian Limited of London, United Kingdom.

Dual language systems can be used to relieve the user's burden when specifying dependencies, but since the instructions in the high level language must be written in such a way that they can be translated into the low level build language, the programming concepts that can be employed in a dual language system are still constrained by the limitations of the low level build language. Current dual language build systems therefore do not fully support concepts such as modularity of the build description.

The constraints implicit in current dual language systems do not enable the reuse of code and lead to difficulties in testing, maintaining and extending the build systems. Although dependency errors are less likely to be introduced using a dual language system compared to specifying the entire build description by hand in a low level language, the additional layers of abstraction and translation mean that any errors that are introduced are further removed from their root cause. It can therefore be even harder to identify the root cause of bugs in a built software system, when that cause lies in an error in the high level language description of a dual language build system.

Furthermore, the translation step in a dual language system can itself introduce bugs into the software system being built. Not only will the root cause of translator-originating bugs be very difficult to identify, but it will not be present in the high level language description - hugely complicating debugging.

### Single Language Build Systems

Single language build systems are systems that read a build description written in a single high level language and, rather than translating this description into a low level build language, implement scheduling and dependency management directly from the high level description.

Apache Ant and SCons are examples of single language build systems. Apache Ant reads build descriptions written in eXtensible Markup Language (XML), whereas SCons descriptions (called SConscripts) are written in the Python Software Foundation's Python scripting language.

Single language systems such as Ant and SCons lead to highly complicated descriptions, since they need to implement the functionality of a low-level build language within the constraints of the high level language. Even moderately complex Ant build descriptions have a highly hierarchical structure and are pervasively cross-linked. Moreover, high level languages tend to be prolix in nature and the XML and Python build descriptions written for Ant and SCons will be far larger than the equivalent descriptions written in the Make build language, for example.

The large and highly complex build descriptions that are necessitated by the used of single-language build systems frequently lead to performance problems when applying such systems to large code bases. When bugs are introduced in a software system build as a result of errors in the build description, the scale and complexity of the description makes debugging a lengthy and very difficult process.

Both Single and dual language build systems can be used to aid the creation of a build description. However, each of these techniques represents a compromise between ease of use and performance and requires the user to provide build descriptions in a form that is very difficult to debug.

Because of the difficulties in generating, testing and debugging the complex build descriptions required by large scale software systems, users are commonly forced to break such systems apart into more manageable components and generate a smaller, simpler build description for each component. However, building a system as a series of separate builds limits the potential for parallelism in building the overall system.

There has long been a great need for a single build system that avoids both the complexity of describing a build in a high level language (single language solution) without the obfuscating and error prone step of translation (dual language solution). Some new build utilities, such as the Electric Accelerator provided by Electric Cloud, Inc. have attempted to solve the associated problems by avoiding the use of a high level language description altogether and instead providing a layer of automated checking and correction for a low level language description. However, automated error correction is unreliable and the description of a complex build using a low level language remains a burdensome task.

What is needed is a single build system that simultaneously provides the benefits of both high and low level languages without reducing the performance of the build process necessitating a complex build description. Such a build system ought also to simplify test and debugging and reduce the overall build time.

### SUMMARY OF THE INVENTION

In a first aspect, the present invention provides a build description module for use by a build system, the module comprising: an interface specification portion containing metadata relating to the module, the metadata including data specifying the module's inputs and outputs; and an implementation portion containing build instructions mapping the module's inputs to its outputs.

In a second aspect, the present invention provides a method of generating a build description using first and second build description modules, each of the modules having an interface specification portion and an implementation portion, the method comprising: reading, from the interface specification portions of the first and second modules, metadata including data specifying the modules' inputs and outputs; reading, from the implementation portions of the first and second modules, build instructions mapping the modules' inputs to their outputs; and based on the read metadata, instantiating the modules' build instructions as the build description.

In a third aspect, the present invention provides a build system configured to perform the method of generating a build description.

In a fourth aspect, the present invention provides a computer readable medium having stored thereon the build system.

The use of modules in the build description introduces considerable reusability, extensibility and testability into the description.

In terms of reusability, the use of modules allows a frequently used procedure in a build to be written just once in the build description and then called multiple times in a function-like manner. What is more, the separation of the module into interface specification and implementation portions allows the module to be easily defined as an extension of an existing module, avoiding the need to rewrite any common functionality when the functionality of one module is build upon that of another.

Not only does the reuse of code considerably reduce the burden on the user describing the build process, but it provides a number of further advantages once the build description has been written.

The reuse of code results in a shorted build description, since fewer lines of code will be necessary to represent a build that has repeated functionality. Not only does this reduce the storage requirements when saving the build description, but it greatly simplifies the debugging process - the debugger quite literally has fewer lines of code to test.

Reducing the total lines of code is not the modular build description's only contribution to the debugging process. Crucially, it also permits the build description to be tested on a modular basis. Since every module of the build description has separate implementation and interface specification portions, these modules can be tested independently by providing suitable test parameters according to the interface. Individual modules can therefore be tested separately before being combined as parts of a larger build. Separate testing allows confidence to be built in each component, making it easy to isolate the source of a problem. When problems or improvements are identified, the separation of a module's interface specification and its implementation make it easy to 'swap-out' a module for an alternative with a compatible interface.

Preferably, the build description is monolithic. In the context of this document, a monolithic build description describes the entire build process for a system. A monolithic build description will normally consist of a single computer file, but could span multiple files. In the GNU Make build language, for example, a monolithic build description could span multiple files through the use of the include instruction. However, two unconnected makefiles could not form part of the same monolithic build description, since they describe two separate build processes (even when one of these build processes makes use of the output of the other).

By way of example, a single makefile describing the build process for a complete software system is a monolithic build description. However, when the same system's description is broken apart into two unconnected makefiles, where the second makefile describes a process of building the final system using the output of the first makefile, the overall build process is split into two distinct builds and its build description (i.e. the two separate make files) is no longer monolithic.

One advantage of a monolithic build description is that it allows the build utility to parallelise the build process in the most efficient manner, reducing the overall build time. In order that the build utility can schedule the build most efficiently, the build description must include complete information on dependencies within the build process.

Another way in which the use of a monolithic description can be used to reduce the overall build time is through the use of incremental builds. Because a monolithic build description includes complete dependency information, it is possible when rebuilding a system that has been only partially changed since it was last built to use this information to ensure that only those parts of the system that will be affected by the change are re-build.
Incremental building can thus significantly decrease the overall (re)build time.

An important point is that the generation of a monolithic build description does not detract from the advantages associated with build description modules, such as the reduced storage requirement. The description of the build process using modules is complete, and can be used to generate the monolithic build description at any time.

The method of generating a build description may further comprise the step of building a system according to the build description.

The interface specification portion and the implementation portion may both be located within the same file. Alternatively, they may be located in different files. Locating both portions in the same file is useful in large build descriptions that are based on many different modules, since it ensures that the implementation and body portions will not become separated. However, splitting the two portions between files is useful where it is desirable to 'look' the interface specification (for example when a particular build structure has already been agreed upon) and modification of only the implementation portion of the modules.

Preferably, the interface specification portion and the implementation portion are in different languages. Still more preferably, the implementation portion is in a build language, for example GNU Make, whereas the interface specification portion is not in a build language. The monolithic build description generated from the build description modules is preferably in the same low-level build language as the implementation portion of the modules.

The ability to specify the implementation of a module in a low level build language allows the module's functionality to be defined without using a complex high level language (as in single-language systems), and without requiring translation (dual language systems). The simplicity of the resulting code, and the fact that it is not separated from the final build description by a layer of translation, means that debugging can be performed easily and directly within the module and that any changes made within the modules will be mapped directly into the end build description.

The interface specification portion may be in any language suitable for defining the interface. Preferably, the interface specification is written in a mark-up language such as eXtensible Mark-up Language (XML), which is clear and easily adapted for the purpose. XML is also well suited for machine generation.

A module may be an extension of another module. This extensibility reduces the overall size of the build modules and aids debugging, since it allows code to be easily reused where modules share a common underlying functionality.

### DESCRIPTION OF THE DRAWINGS

The present invention will now be described by way of example with reference to the accompanying drawings. In the drawings:
Fig. 1 is an XML code listing defining exemplary interface specification portions of build description modules according to the present invention;
Fig. 2 is a code listing of an implementation portion corresponding to a interface specification from Fig. 1;
Fig. 3 is a code listing of an implementation portion corresponding to a different interface specification in Fig. 1;
Fig. 4 is a tree illustrating dependencies in a software system build; and
Fig. 5 is an alternative illustration of the tree of Fig. 4, illustrating the division of nodes across multiple build descriptions.

### DETAILED DESCRIPTION

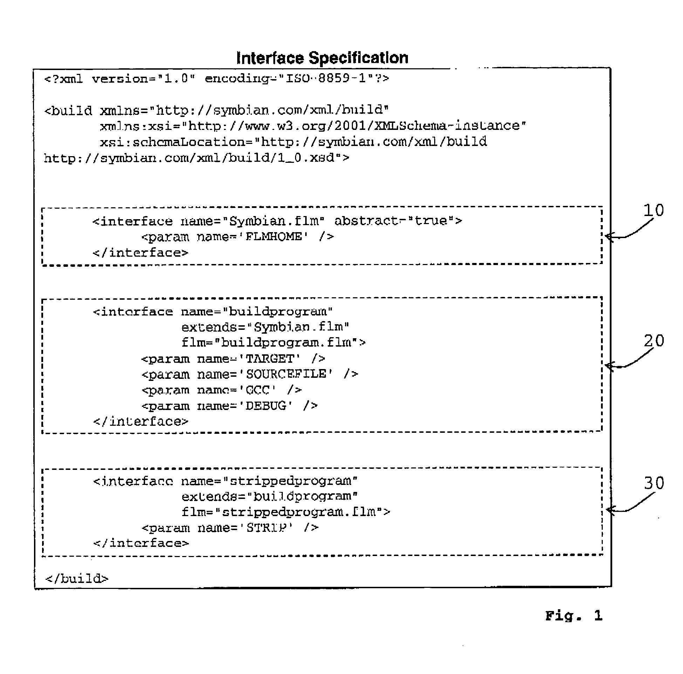

The listings in Figs. 1, 2 and 3 set out an exemplary implementation of a build description that uses modules. Although it is anticipated that these three listings will be stored as separate files, the listings can be combined into a single file, or stored across any other suitable file structure.

Fig. 1 lists XML code that includes the interface specification portions 10, 20, 30 of three modules. The interface 10 for the first module "Symbian. flm" is an abstract type which is the root of all module interfaces used in the build system. The build system uses a hierarchy of abstract interfaces for all modules in order to ensure consistency across different core functionality. For example "Symbian.mmp" would be the interface for all objects that are described in .mmp files, "Symbian.dll" is the interface for all .dll files, "Symbian. exe" is the interface for all . exe files, and so on.

Inputs, outputs and other metadata relating to the module are defined in each interface specification 10, 20, 30 using the <param> tag. In the exemplary listing of Fig. 1 there is no explicit distinction made between the definition of an input and an output, but this need not be the case in other implementations.

The Symbian. flm module's interface specification portion 10 has a single input/output parameter, that of "FLMHOME" (which in this case represents a file path).

The second interface specification 20 relates to a module "buildprogram", which is an extension of the Symbian.flm module. By virtue of theis extension, the buildprogram interface specification 20 inherits the parameter FLMHOME module from the Symbian. flm interface specification. The interface specification 20 for buildprogram defines additional the input/outputs/metadata parameters TARGET, SOURCEFILE, GCC, and DEBUG, which are added to the interface of the buildprogram module.

The implementation portion of a module contains build instructions that relate to the inputs and outputs of the interface defined in the module's interface specification. The interface specificaion's inputs are thus mapped to its outputs by the functionality defined in the implementation portion.

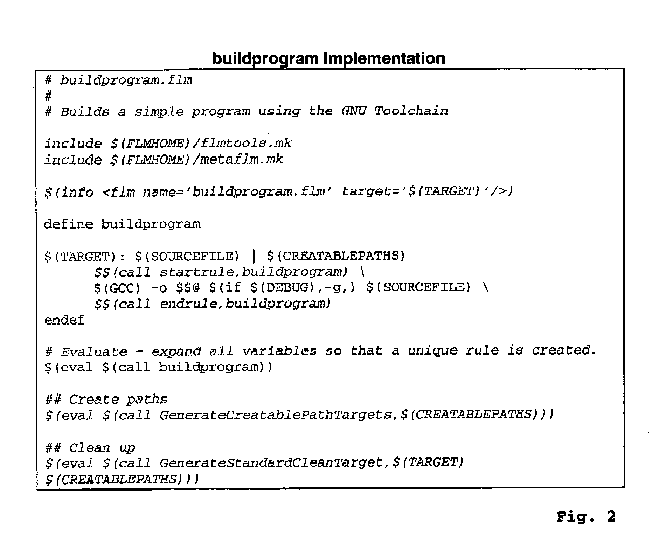

The interface specification 20 for the buildprogram module refers to buildprogram. flm, the implementation portion of the buildprogram module. This implementation portion is listed in the Make build language in Fig. 2, which invokes the GNU GCC compiler in order to generate the required outputs, using the inputs and other metadata. The files referred ton in the include instructions define global constants and some GNU Make macros for common operations, e.g. constants for host specific characters, macros to create output in a consistent manner, macros to create standard boilerplate code for creation of paths or cleanup, etc..

The third interface specification 30 in Fig. 1 specifies the interface for a "strippedprogram" module. The strippedprogram module extends the buildprogram module and therefore inherits the parameters TARGET, SOURCEFILE, GCC, DEBUG, and FLMHOME from the buildprogram module (the last of which having been previously inherited by the buildprogram interface specification 20 from the Symbian. flm interface specification 10). The strippedprogram interface specification 30 also adds, to these inherited parameters, the further parameter STRIP.

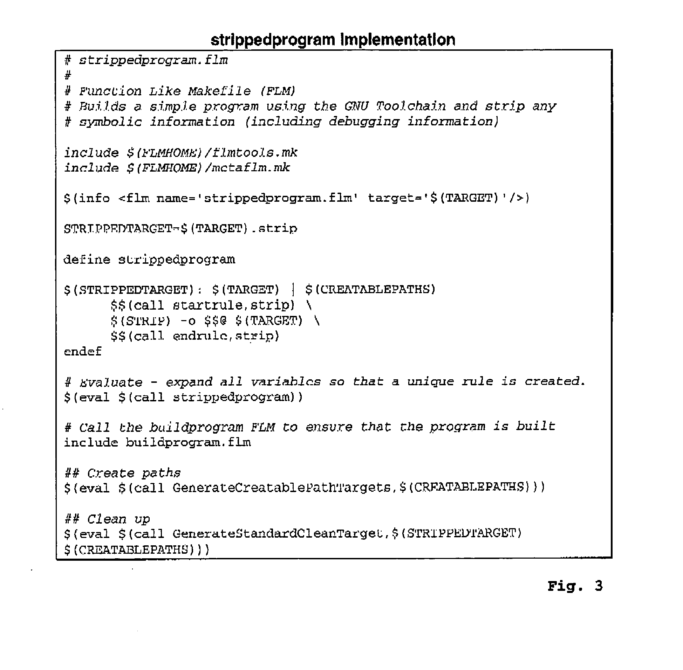

The interface specification 30 for the strippedprogram module refers to strippedprogram.flm, which contains the implementation portion of the strippedprogram module. This implementation portion is listed in Make build language in Fig. 3. The instructions listed in Fig. 3 have the effect of building a software system in such a way that the resulting machine code is stripped of all symbolic information. In order to do this, the strippedprogram module calls the buildprogram module (by first defining the parameters that will be used by the buildprogram module, then referencing it in an include instruction).

The example listed in Figs. 1, 2 and 3 demonstrates a modular definition of a build description using separated interface specifications and implementations, and how such a description enables code reuse. This reuse of code is enabled in two principal ways. Firstly, the same module can be called multiple times by other modules (the module buildprogram is called once, by the strippedprogram module in the example given, but it could also be called by other modules - or indeed more than once by the strippedprogram module). Secondly, the modular nature of the build description allows a new module to extend a previous module, where the code from the original module would otherwise have been repeated in order to implement the functionality of the second module (for example, the strippedprogram module extends the buildprogram module).

The build system generates a build description from the build description modules. The build description that is generated will depend on the build utility that the build system uses. For example, when the GNU Make build utility is used, the build description should be in the form of a makefile. The use of build description modules facilitates the description of build processes for highly complex software systems, enabling a monolithic build description (e.g. a single makefile) to be generated where previously the build description would have been broken across multiple component builds.

The generation of a monolithic build description does not impede the debugging process, unlike the translation step in a prior art dual-language solution. This is because the implementation portions of the build description modules can be written in the language that is used in the build description and the build process can therefore be debugged directly from the modules. Indeed, the build language used in the implementation portion of a module can be tested in isolation, simply by providing suitable parameters as defined in the interface specification.

An important effect of using a modularised build description is the facilitation of parallel building. In the embodiment described above with reference to Figs. 1, 2 and 3, the implementation portions of the build description modules are written in the GNU Make build language. GNU Make has a parallel build capability, meaning that it can exploit parallel processing environments in order to build components of a software system in parallel.

GNU Make is by no means the only build utility that can build a system in parallel - another example is that of the Electric Accelerator, provided by Electric Cloud, Inc. The choice of build utility, and therefore of language, used in the implementation part of a build description module is not limited to GNU Make and any suitable language and build utility can be used.

To exploit potential parallelism in a build, the build utility (GNU Make, in this example - although others could be used) must be provided with a build description that satisfies the following three criteria:
- The makefiles encode a complete and correct dependency tree
- All dependencies must be contained within the same makefile
- All build artefacts must be unique and must use absolute paths

Besides enabling parallel builds, these makefile properties are also sufficient to enable incremental builds.

The requirement that Make is provided with a complete and correct set of dependencies in a single set of instructions is in order that Make can schedule the build process across the available processors. Without a complete knowledge of this dependency information, Make is unable to correctly schedule a parallel build.

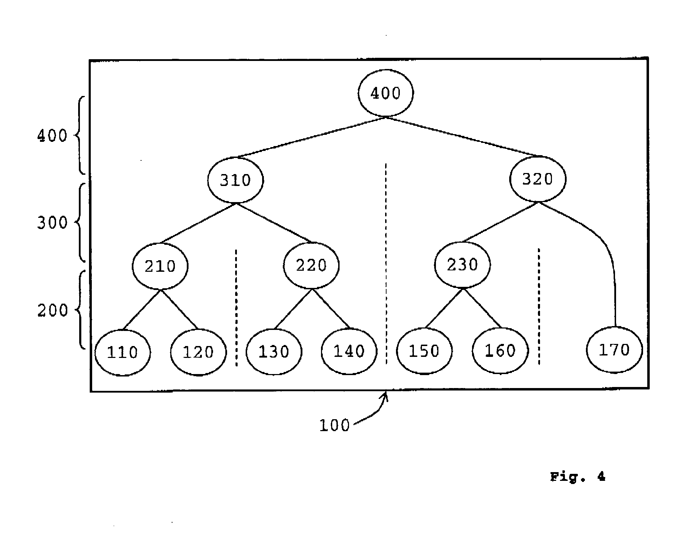

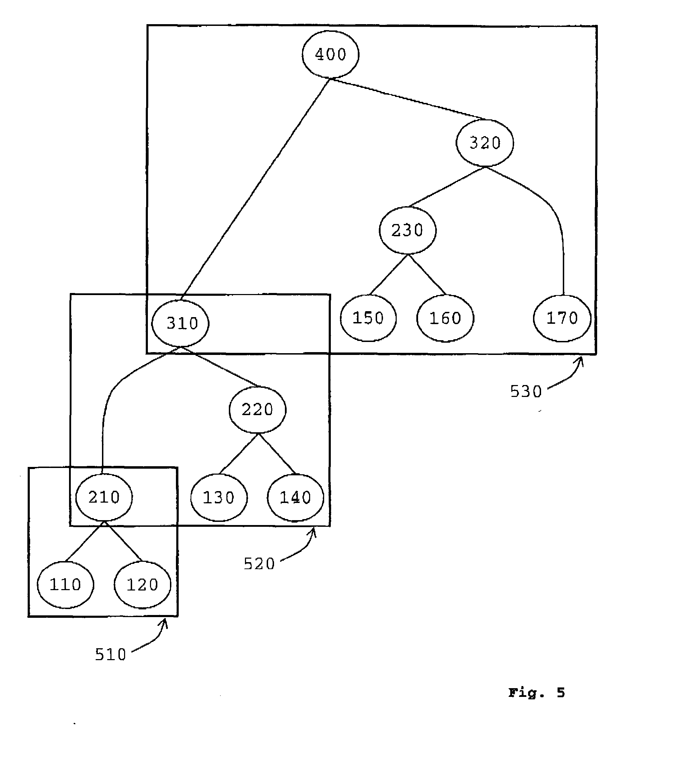

Figs. 4 and 5 both illustrate the same structure of dependencies between nodes 110-170, 210-230, 310, 320, 400 of a build process for a software system. These dependencies represent the required build order for the system - i.e. node 400 is dependent upon both node 310 and node 320 and therefore cannot be built before these nodes 310, 320 have been built. Node 310 is in turn dependent upon nodes 210 and 220, and so on.

In Fig. 4 all of the dependencies are present in a single makefile 100 and the entire build process can be scheduled by Make, since Make is aware of every dependency. Since node 400 is dependent upon nodes 310 and 320 and there are no interdependencies between the structures under these nodes, nodes 310 and 320 can be built in parallel with node 400 subsequently built using the results. The separation (lack of interdependency) that enables this parallelism is represented in Fig. 4 by a broken line, Similar parallelism is present at node 310, whose sub-nodes 210 and 220 can be built in parallel.

If at least three parallel processors are available to it, Make can use the makefile 100 represented in Fig. 1 to build the software system in three build 'cycles', In the first cycle 200, the three processors, operating in parallel, build nodes 210, 220 and 230 from nodes 110-160. In the second cycle 300 two of the processors build nodes 310 and 320 from the previously built nodes 210-230. In the third cycle 400, one of the processors builds final node 400 from previously built nodes 310 and 320. The complete build process can therefore be completed in just three build cycles.

Consider now the same dependency tree built using a prior art build process, shown in Fig. 5. Here, the build description has been separated into three separate makefiles 510, 520, 530 as a result of the complexity of the specification and to facilitate testing. Makefile 520 uses node 210, which is the output of makefile 510; makefile 510 must therefore be processed before Makefile 520. Similarly, makefile 530 uses the output of makefile 520 (node 310). It is therefore necessary to process the makefiles in the correct order (510, 520, then 530).

The build process of Fig. 5 must start with the processing of makefile 510, where node 210 is built from nodes 110 and 120 in a first build cycle. Once node 210 has been built, Make can then be used to process makefile 520, building node 220 from nodes 130 and 140 in a second build cycle, then node 310 from nodes 210 and 220 in a third build cycle. Finally, once node 310 has been built, Make can be used to process the third make file. Node 230 is built from nodes 150 and 160 in a fouth build cycle, node 210 is build from nodes 230 and 170 in a fifth build cycle, and the final node 400 is built from nodes 310 and 320 in a sixth build cycle.

If any of the build files 510, 520, 530 of Fig. 5 had an internal dependency structure that could be built in parallel then Make could do so, using parallel processors. However, this parallelism is restricted to the structure within individual makefiles 510, 520, 530 - not across the whole build process.

In this example, basing the build process on a monolithic build description results in half the number of build cycles compared to the three makefile example illustrated in Fig. 5. This represents a considerable reduction in the total time taken to complete the build. What is more, due to the use of build description modules, the monolithic solution still enables the individual testing of subsets of subsets of nodes.

The applicant hereby discloses in isolation each individual feature described herein and any combination of two or more such features, to the extent that such features or combinations are capable of being carried out based on the present specification as a whole in light of the common general knowledge of a person skilled in the art, irrespective of whether such features or combinations of features solve any problems disclosed herein, and without limitation to the scope of the claims. The applicant indicates that aspects of the present invention may consist of any such feature or combination of features. In view of the foregoing description it will be evident to a person skilled in the art that various modifications may be made within the scope of the invention.

## Claims

1. A build description module for use by a build system, the module comprising:
an interface specification portion containing metadata relating to the module, the metadata including data specifying the module's inputs and outputs; and
an implementation portion containing build instructions mapping the module's inputs to its outputs.

2. The module of claim 1, wherein the interface specification portion and the implementation portion are both located within the same file.

3. The module of claim 1, wherein the interface specification portion and the implementation portion are located in different files.

4. The module of any preceding claim, wherein the interface specification portion is in a first language and the implementation portion is in a second language.

5. The module of claim 4, wherein the second language is a build language and the second language is not a build language.

6. The module of any preceding claim, wherein the module is an extension of another module.

7. A method of generating a build description using first and second build modules, each of the modules having an interface specification portion and an implementation portion, the method comprising:
reading, from the interface specification portions of the first and second modules, metadata including data specifying the modules' inputs and outputs;
reading, from the implementation portions of the first and second modules, build instructions mapping the modules' inputs to their outputs; and
based on the read metadata, instantiating the modules' build instructions as the build description.

8. The method of claim 7, wherein the build description is monolithic.

9. The method of claim 7 or claim 8, further comprising building a system according to the build description.

10. The method of any of claims 7 to 9, wherein the interface specification portion and the implementation portion of a module are located in the same file.

11. The method of any of claims 7 to 10, wherein the interface specification portions are in a first language and the implementation portions are in a second language.

12. The method of claim 11, wherein the second language is a build language and the second language is not a build language.

13. The method of any of claims 7 to 13, wherein the second module is an extension of a third module.

14. Software for performing the method of any of claims 7 to 13.

15. A computer readable medium having stored thereon instructions comprising the software of claim 14.
